# EUROPEAN PATENT SPECIFICATION

(11) **EP 4 636 269 B1**
(45) Date of publication and mention of the grant of the patent: **12.08.2026**
(21) Application number: 24170273.7
(22) Date of filing: 15.04.2024
(51) Int. Cl.: F16B 43/00, F16B 39/24

(54) **WASHER AND SCREW CONNECTION ASSEMBLY**
UNTERLEGSCHEIBE UND SCHRAUBENVERBINDUNGSANORDNUNG
ENSEMBLE DE LIAISON À RONDELLE ET VIS

(43) Date of publication of application: 22.10.2025
(73) Proprietor: Growermetal S.p.A., 23885 Calco (LC) (IT)
(72) Inventor: CATTANEO, Paolo, 23885 Calco (LC) (IT)
(74) Representative: Kador & Partner Part mbB

(56) References cited:
- EP-B1- 3 296 578
- FR-A1- 2 907 970

## Description

The present invention relates to a washer, in particular a contact washer for a screw connection of a traction battery in an electric vehicle and a screw connection assembly for a traction battery.

A traction battery of an electric vehicle requires potential equalization, e.g. between different parts of the battery housing, in order to ensure correct operation of the insulation monitoring device (IMD) of the electric vehicle. The potential equalization can be achieved by connecting the different parts of the battery housing with one or more screw connections each including a contact washer.

Contact washers for electrical screw connections, for example according to SN 70093, are known in the art and are used e.g. in motor vehicles for earthing applications or overvoltage protection on painted, electrically conductive metal mating surfaces.

However, higher demands are placed on a contact washer for a traction battery, as the latter must be highly resistant to corrosion due to its location in the underfloor region of the vehicle. Therefore, all parts of the battery housing as well as the screws and nuts for connecting the parts are provided with a non-conductive anti corrosion coating such as a cataphoresis coating, also known as KTL-coating or e-coating. This must be removed by the washer to achieve potential equalisation. At the same time, it is important that sufficient corrosion protection is maintained when the required potential equalisation is established.

Document FR 2 907 970 A1 discloses a mechanical connection between two metal elements carrying out electrical conduction. Document EP 3 296 578 B1 discloses a lock washer for use in high current applications for electrically conductive connections.

The technical problem underlying the invention is thus to provide a washer and a screw connection assembly including the washer which are able to establish potential equalisation between different parts of a traction battery without impairing corrosion protection thereof.

This problem is solved by the invention according to the independent claims. Further preferred developments are described by the dependent claims.

The present invention provides a washer, in particular a contact washer, for a screw connection, also designated as "bolted joint", of a traction battery.

The position of the individual teeth at a distance from the peripheral edge of the washer ensures that the coating of the bearing is only removed below the washer so that corrosion protection of the corresponding part is maintained.

Furthermore, the serrations on the first surface of the washer (also designated as "top side"), which, for example, are in contact with a bolt under-head and the individual teeth on the second surface of the washer (also designated as "bottom" or "lower side") have also an anti-loosening effect, i.e. the screw connection once fixed is less prone to be loosened, due to the friction created by the serration/teeth. This is all the more important because traction batteries of electric vehicles are subjected to vibrations during operation of the electrical vehicle.

Individual teeth means that the teeth are not directly adjacent to each other. Furthermore, usually the second surface of the washer apart from said individual teeth does not have further protrusions, i.e. is flat/smooth.

The screw connection may be used for establishing potential equalization between different parts of the battery, e.g., different parts of the battery housing, and may particularly have a right-hand thread.

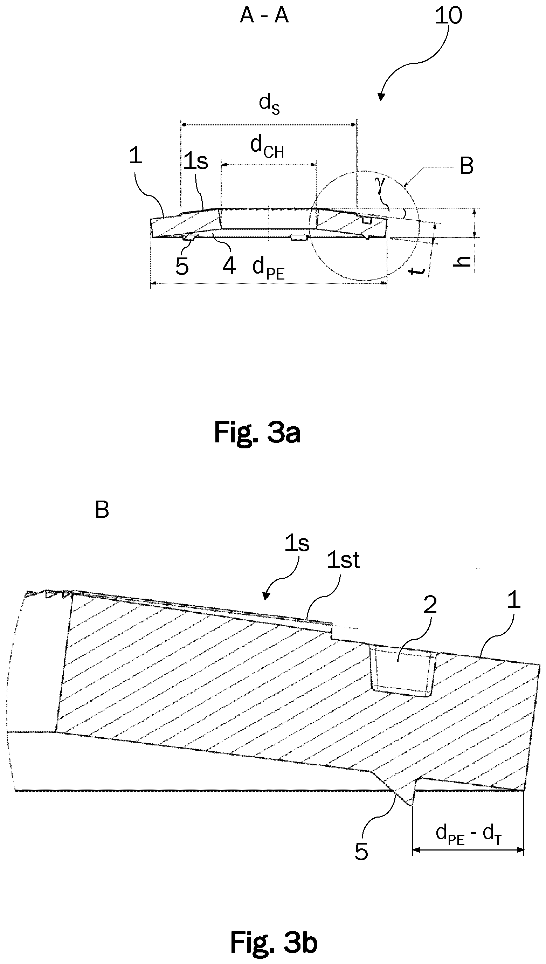

The washer has a central hole, a first surface (top surface), a second surface (bottom surface) opposite the first surface, and a peripheral edge. The terms "top" or "bottom" as used herein refer to a cross sectional view of the washer as shown in Fig. 3a. The plane of the washer, or washer plane, is a plane in which the outer circumference of the washer is contained. It is usually parallel to the workpiece and/or bolt under-head/nut surface the washer is engaged with.

The washer may have a flat shape, i.e. a shape so that the surfaces of the washer, which usually are parallel to each other, are also parallel to the washer plane, and, particularly preferred, the washer may have a conical shape, i.e. is a conical washer.

Accordingly, in a particularly preferred embodiment of the washer, the first and the second surfaces have a conical shape and are usually parallel to each other. In other words, the first and the second surfaces may be parallel to a cone with its axis going through a center of the washer. The base of the cone is parallel to the washer plane. The (theoretical) top of the cone is closer to the first than to the second washer surface. Thus, when engaged, the first surface of the washer engages the workpiece and/or bolt under-head/nut first at or close to its inner circumference.

The cone may have a cone angle (angle between the base of the cone and the cone faces) in a range between 3° and 15°, such as between 4° to 12°, 4° to 10°, or 5° to 9°.

Thus, a height of the washer may be larger than a thickness thereof. The height of the washer may be understood as an extension of the washer in vertical direction from a lowest point of the second surface to a highest point of the first surface, not considering any teeth protruding from the surfaces. As a result of the conical shape a diameter of the central hole at the first surface may be larger than a diameter of the central hole at the second surface.

The conical shape of the washer provides a spring force that helps to keep the preload on the screw connection.

Furthermore, the individual teeth at the second surface of the washer are the first contact points on the bearing surface when the washer is installed because they are protruding from the washer. This means that during the bolt tightening they dig into the material and then, due to the conicity of the washer, they slightly move in radial direction. This movement increases the contact of the washer with the metal material below the coating, improving the current transmission.

In a further preferred embodiment of said conical washer, a portion of the second surface of the washer adjacent to its peripheral edge (outer diameter) is parallel to the washer plane.

During the flattening of the washer while it is tightened, the washer slide more gently onto the bearing surface due to the portion parallel to the washer plane and hence usually also parallel to the bearing surface, thus reducing the risk of damaging the coating on the bearing surface itself.

The portion of the second surface of the washer adjacent to its peripheral edge being parallel to the washer plane may extend from the peripheral edge to a circle around the washer center in direction towards the washer center which is from 20 to 80 %, preferably from 30 to 70 %, such as from 40 to 60 % of the distance from the peripheral edge to the circle around the washer center of the washer on which the individual teeth are arranged.

For example, said portion may extend from the peripheral edge to towards the center of the washer from 0.4 to 1 mm, such as 0.5 to 0.8 mm.

The peripheral edge of the washer may have a diameter that is at least twice as large, in particular more than twice as large, as a diameter of the central hole. In particular, the central hole is configured to receive a shank of a screw of the screw connection.

The diameter of the central hole may be understood as a smallest diameter thereof and may define an inner circumference of the washer. On the other hand, the diameter of the peripheral edge of the washer may define an outer circumference thereof.

The thickness of the washer may be in a range between 1 mm and 5 mm, in particular between 2 mm and 3 mm. This ensures that the washer has sufficient strength. The thickness of the washer may be understood as a minimum extension of the washer in direction perpendicular to a washer surface, i.e. its extension from the first to the second surface not including any teeth protruding from the surfaces.

A serration is arranged around the central hole on the first surface of the washer, and a plurality of individual teeth is arranged on the second surface of the washer at a distance from its peripheral edge.

The serration may be configured to engage with an underside of a screw head (under head surface of the screw) facing the first surface of the washer in the screw connection, and the plurality of individual teeth may be configured to engage with a bearing, e.g. a surface of a housing part of the traction battery, disposed between the screw and a nut of the screw connection and facing the second surface of the washer.

The serration on the first surface of the washer can have different geometries, for example, the teeth may have different shapes such as saw teeth, triangular etc..

According to an example, the serration may be provided on the first surface in an annular portion thereof having an inner diameter corresponding to a diameter of the central hole and an outer diameter smaller than a diameter of the peripheral edge of the washer. In other word, the serration may be arranged in an area of the top surface of the washer where it engages with the under-head surface of the screw so that it can effectively remove a coating therefrom. The remaining portion on the first surface between the serration and the peripheral edge of the washer may be formed as a smooth/planar surface. For example, there may be recesses in the planar surface that can be used e.g. for holding the washer during manufacturing.

According to an example, the serration on the first surface may include a plurality of teeth which are directly adjacent to each other so that there is no planar section between the teeth. In this way, a high number of teeth can be positioned in the annular portion surrounding the central hole of the washer. In particular, the teeth of the serration may have the same size and shape.

The serration on the first surface of the washer may comprise between 0.8 and 1.0, preferably 0.85 and 0.9 teeth per mm of inner circumference of the washer. For example, the central hole of the washer may have a diameter of 11.2 mm to be used with an M10 screw leading to an inner circumference of the washer of about 35.2 mm, and the number of teeth may be 40, so that per mm of inner circumference 0.9 teeth are present.

Preferably, a height of the teeth, i.e. maximum dimension of the teeth in direction perpendicular to the washer surface, is from 0.15 mm to 0.3 mm, more preferably is from 0.16 mm to 0.29 mm and most preferably is from 0.17 mm to 0.28 mm, such as from 0.20 to 0.25 mm.

According to an example, each tooth of the serration on the first surface may extend at a predetermined angle relative to a radial direction from a point on a circumference of the central hole to a point on an outer circumference of the annular portion. In other words, in top view of the first surface the teeth run in a direction from the inner circumference of the washer to the outer circumference of the annular portion and are inclined with regard to radially extending straight lines originating from the inner circumference.

According to an example, the predetermined angle may be a negative angle relative to the radial direction, so that an outer end of each tooth point into tightening direction of the screw connection. A negative angle relative to the radial direction shall be understood as an angle resulting from a clockwise rotation of a radial axis. This means that the teeth are inclined with regard to the radially extending straight lines originating from the inner circumference of the washer in such a way that the ends of the teeth distant from the inner circumference point in the tightening direction of the screw connection.

Preferably, the predetermined angle is in a range from -5° to -20° and more preferably in a range from -5° to -10°, such as e.g. -7°.

According to an example, in a cross-section view of the washer, a height of each tooth of the serration at its outer end is larger than a height on its inner end, i.e. the teeth are higher at the end apart from the inner circumference of the washer than at the end adjacent to the inner circumference of the washer.

The described shape of the teeth results in a scaping edge on each tooth, which allows for effectively removing a coating from an under-head surface of the screw while tightening the screw connection.

According to an example, the plurality of individual teeth on the second surface may be arranged along a circle around the washer center having a diameter that is smaller than the diameter of the peripheral edge of the washer and larger than the outer diameter of the annular portion on which the serration is provided. In this way, the individual teeth are disposed apart from the peripheral edge of the washer as well as from the serration on the opposite surface of the washer. The latter can prevent that a force generated by engaging the serration with the nut counteracts a force required for engaging the individual teeth with the bearing.

The individual teeth may particularly have the same size and shape.

According to an example, each of the plurality of individual teeth may have a triangular cross section, which may extend downwards from the second surface.

In particular, one side of the triangle cross section may be arranged perpendicular to the second surface of the washer. In this way, a tip of each individual tooth is created as an end point of said side, giving the teeth high strength. The side of the individual teeth perpendicular to the second surface may be shorter than a side extending along the second surface, further improving the strength of the individual teeth.

The side of the individual teeth perpendicular to the second surface may have a length from 0.2 mm to 0.5 mm, such as e.g. 0.35 mm, and the side of the triangle cross section extending along the second surface may have a length from 0.3 mm to 0.7 mm, such as e.g. 0.5 mm.

In top view, the upper edge of the teeth may be tangential to the circle around the washer center or have a curvature corresponding to the part of the circle around the washer center on which they are arranged. Usual, the edges have a straight shape and are arranged tangential to the circle around the washer center on which the teeth are arranged

The length of the edge of each of the individual teeth in top view may be from 1.5 to 5 %, preferably 2 to 4%, such as from 2.3 to 2.9 %, of the total circumference of circle around the washer center on which the individual teeth are arranged.

Thus, the length of each tooth in top view along the circumference of circle around the washer center on which they are installed may lie in a range from 1 mm to 3 mm, such as e.g. 2 mm.

Usually, the number of the individual teeth will be from 3 to 10, or from 4 to 8.

According to an example the peripheral edge of the washer may be rounded in a direction of the second surface. In other words, the peripheral edge may be rounded at the bottom surface of the washer, to prevent the coating of the bearing from being damaged at this position by tightening the screw connection. Alternatively, a chamfer may be positioned at the bottom side of the peripheral edge of the washer for avoiding a sharp edge at this position.

The present invention further concerns a screw connection assembly for a traction battery according to the invention comprises a screw, a nut and the washer in any one of the embodiments as described herein.

According to an example, a serration on a first surface of the washer is configured to engage an under head surface of the screw and a plurality of individual teeth on a second surface of the washer is configured to engage a bearing having a non-conductive coating which may be configured to be arranged between the screw and the nut.

The screw and the nut may also be provided with a non-conductive coating.

The washer and the screw connection assembly described above are apt to establish potential equalization between different parts of a traction battery without impairing corrosion protection thereof.

The invention further pertains to an assembly comprising the screw connection in any one of the embodiments disclosed herein wherein the assembly further comprises elements to be connected by the screw connection and wherein an equalization of the electrical potential between the elements is effected.

Finally, the invention pertains to the use of a washer in any one of the embodiment as described herein in a screw connection of a traction battery, wherein usually the washer improves the electrical connectivity between the connected parts.

### Brief description of the figures

Fig. 1a and 1b show a washer according to a first example of the present invention in a spatial view, wherein Fig. 1a shows the washer from above and Fig. 1b shows the washer from below.
Fig. 2a shows the washer depicted in Figs. 1a and 1b in a top view.
Fig. 2b shows the washer depicted in Figs. 1a and 1b in a bottom view.
Fig. 3a shows the washer depicted in Figs. 1a and 1b in a sectional view.
Fig. 3b shows a detail of the sectional view of the washer depicted in Fig. 3a.
Fig. 4a shows schematically a test set-up for measuring connection resistances in a screw connection in which a washer according to an example of the present invention is used.
Fig. 4b shows a diagram depicting connection resistances between single parts of the screw connection measured with the test set up shown in Fig. 4a.
Fig. 5a and 5b show a washer according to a second example of the present invention in a spatial view, wherein Fig. 5a shows the washer from above and Fig. 5b shows the washer from below.
Fig. 6a shows the washer depicted in Figs. 5a and 5b in a top view.
Fig. 6b shows the washer depicted in Figs. 5a and 5b in a bottom view.
Fig. 7a shows the washer depicted in Figs. 5a and 5b in a sectional view.
Fig. 7b shows a detail of the sectional view of the washer depicted in Fig. 7a.

### Examples

In the following, examples of the present invention is described in detail with reference to exemplary figures. In the figures, identical elements are provided with identical reference signs, so that a repeated description of the elements is omitted unless this is necessary.

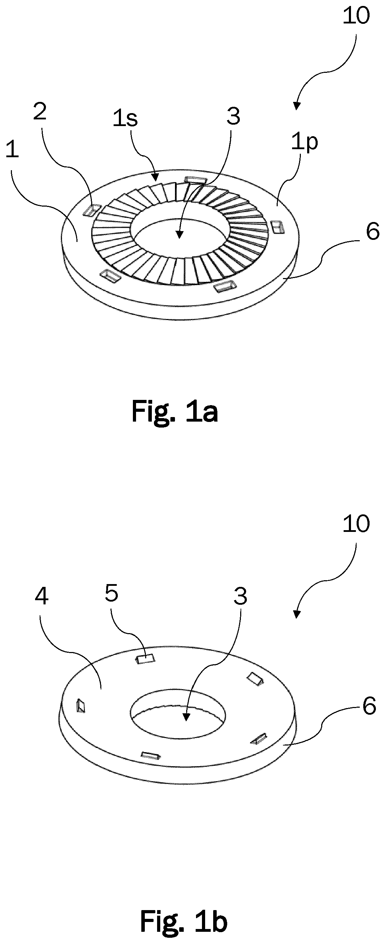

Fig. 1a and 1b show a washer 10 according to a first example of the present invention in a spatial view, wherein Fig. 1a shows the washer 10 from above and Fig. 1b shows the washer 10 from below.

The depicted washer 10 has a central hole 3 for receiving a shank of a screw of a screw connection, a top surface 1 (first surface), a bottom surface 4 (second surface) opposite to the top surface and a peripheral edge 6.

The washer 10 may in particular be a contact washer for a screw connection of a traction battery, wherein the screw connection may be used for establishing potential equalization between different parts of the battery, e.g., different parts of the battery housing, and may particularly have a right-hand thread.

A serration 1s is arranged around the central hole 3 on the top surface 1 of the washer 10, and a plurality of individual teeth 5 is arranged on the bottom surface 4 of the washer 10 at a distance from its peripheral edge 6. In the depicted example, five individual teeth 5 having the same size and shape are arranged on the bottom surface 4 of the washer 10 (see Fig. 1b).

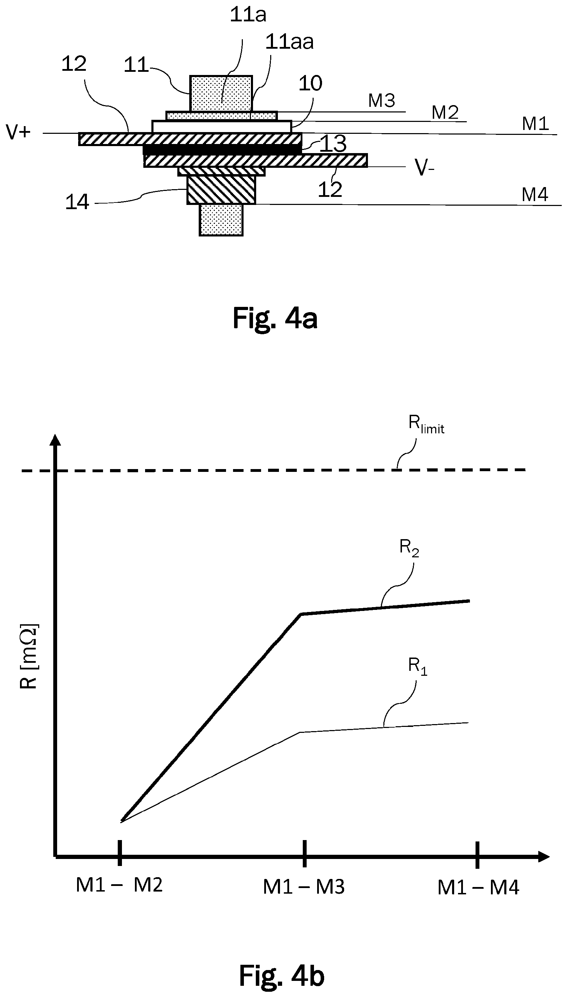

The serration 1s may be configured to engage with an under head surface 11aa of a screw 11 (see Fig. 4a) facing the top surface 1 of the washer 10 in the screw connection, and the individual teeth 5 may be configured to engage with a bearing 12 (see Fig. 4a), disposed between the screw 11 and a nut 14 of the screw connection and facing the bottom surface 4 of the washer 10.

The position of the individual teeth 5 shown in Fig. 1b at a distance from the peripheral edge 6 of the washer 10 ensures that the coating of the bearing 12 is only removed below the washer 10 so that corrosion protection of the corresponding part is maintained.

According to Fig. 1a, the serration 1s is provided on the top surface 1 of the washer 10 in an annular portion surrounding the central hole 3. The remaining portion 1p on the top surface 1 of the washer 10, which is arranged between the serration 1s and the peripheral edge 6, is formed as a smooth/planar surface in which five equally spaced recesses 2 are disposed in a circle. The recesses 2 may be used during manufacturing of the washer 10, e.g. to hold it in place.

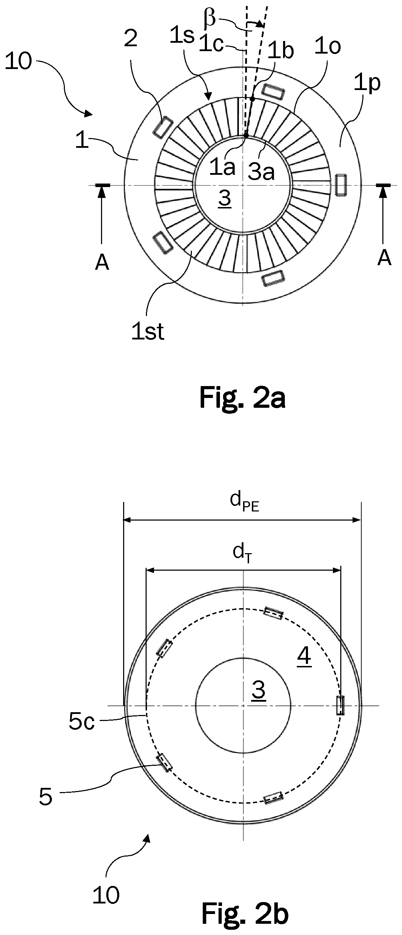

Fig. 2a shows the washer depicted in Figs. 1a and 1b in a top view so that details of the serration 1s are visible. Furthermore, a sectional plane A-A is depicted in Fig. 2a marking a position of the sectional view shown in Fig. 3a.

The depicted serration 1s includes a plurality of teeth 1st, more precisely forty teeth 1st, which are directly adjacent to each other so that there is no planar section between the teeth 1st. In this way, a high number of teeth 1st can be positioned in the annular portion surrounding the central hole 3 of the washer 10. Each of the forty teeth has the same size and shape (see also Fig. 1a)

As illustrated at a single tooth 1st, each tooth 1st of the serration 1s extends from a point 1a on a circumference 3a of the central hole 3 (inner circumference3a of the washer 10) to a point 1b on an outer circumference 1o of the annular portion. In particular, the teeth 1st extend at a predetermined angle β relative to radially extending straight lines 1c originating from the inner circumference 3a.

It is visible that the predetermined angle β is a negative angle so that the teeth 1st are inclined with regard to the radially extending straight lines 1c in such a way that the ends of the teeth 1st distant from the inner circumference 3a point in the tightening direction of the screw connection. In the depicted example the predetermined angle β is about -7°.

The described shape of the teeth 1st results in a scaping edge on each tooth 1st, which allows for effectively removing a coating from an under-head surface 1aa of the screw 11 while tightening the screw connection.

Fig. 2b shows the washer 10 depicted in Figs. 1a and 1b in a bottom view so that the arrangement of the individual teeth is visible. The five teeth are disposed equally spaced along/on a circle 5c whose diameter d_{T} is smaller than a diameter d_{PE} of the peripheral edge 6 of the washer 10 (outer diameter d_{PE} of the washer 10). In the depicted example, the circle 5c has a diameter of 24 mm and each tooth 5 has a length of 2 mm.

As mentioned above, the position of the individual teeth 5 at a distance dₚₑ - d_{T} (see also Fig. 3b) from the peripheral edge 6 of the washer 10 ensures that the coating of the bearing 12 is only removed below the washer 10 so that corrosion protection of the corresponding part is maintained.

Fig. 3a shows the washer depicted in Figs. 1a and 1b in a sectional view along the sectional plane A-A marked in Fig. 2a. In this view, the outer diameter of the washer d_{PE}, the diameter of the central hole d_{CH}, and the outer diameter ds of the annular portion, in which the serration is arranged, are depicted. Furthermore, a thickness t of the washer 10 and a height h thereof are visible.

Additionally, the sectional view reveals the conical shape of the exemplary washer 10. The latter is defined in that the first and second surfaces 1, 4 run parallel to a cone whose axis goes through the center of the washer 10. In the present example, the cone has a cone angle y of about 7°. Due to its conical shape, the height h of the washer is larger than its thickness t. Here, the thickness t is 2.5 mm, and the height h is 3.5 mm.

The peripheral edge 6 of the washer 10 has a diameter d_{PE} that is more than twice as large as the diameter d_{CH} of the central hole 3, to ensure a sufficient strength of the washer 10. In the present example, the diameter d_{PE} of the peripheral edge 6 is 28 mm and the diameter of the central hole 3 is 11.2 mm.

The diameter d_{CH} of the central hole 3 is a smallest diameter thereof and defines an inner circumference 1a of the washer 10 (see Fig. 2a). On the other hand, the diameter d_{PE} of the peripheral edge 6 of the washer 10 defines an outer circumference thereof.

The outer diameter ds of the annular portion corresponds to an outer diameter of the under-head surface 11aa of the screw 11 (see Fig. 4) and is in the present case 21 mm.

Furthermore, a section B is marked in Fig. 3a which is depicted in a larger scale in Fig. 3b.

The depicted section shows in detail a shape of the teeth 1st of the serration 1s and a shape of the individual teeth in a sectional view along the sectional plane A-A.

It is visible that a height of each tooth 1st of the serration 1s at its outer end is larger than a height on its inner end, i.e. the teeth 1st are higher at the end apart from the inner circumference 3a of the washer 10 than at the end adjacent to the inner circumference 3a of the washer 10. A height of the teeth 1st is a maximum dimension of the teeth 1st in direction perpendicular to the first surface 1. In the present example the teeth 1st are 0.25 mm high at their outer ends. The higher outer ends of the teeth 1st further improve their ability to engage with/bite into the under-head surface 11 aa of the screw 11.

Furthermore, Fig. 3a illustrates that the individual teeth 5 have a triangular cross section with one side 5a arranged perpendicular to the bottom surface 4 of the washer 10. In this way, a tip of each individual tooth 5 is created as an end point of said side 5a, giving the teeth 5 high strength. Additionally, the side 5a of the individual teeth 5 perpendicular to the second surface 5 is shorter than a side extending along the second surface 4 (not depicted in detail), further improving the strength of the teeth 5. In the present example, the side of the individual teeth 5 perpendicular to the second surface has a length of 0.35 mm.

By using the washer shown in Figs. 1a to 3b in a screw connection for establishing potential equalization between different parts of a traction battery, a very low connection resistance can be achieved, which is evident in connection with the following Figs 4a and 4b.

Fig. 4a shows schematically a test set-up for measuring connection resistances in a screw connection in which a washer 10 according to an example of the present invention is used.

The test setup of the screw connection includes:
- a stripe 12 of bearing material having a KTL coating of about 25 µm;
- the washer 10 as depicted in the Figs. 1a to 3b;
- a screw 11 with a screw head 11a (M10x1,5x30 Helix Continuous 180°);
- an insulation layer 13 (insulation value 6kV) sandwiched between two equal portions of the stripe 12;
- a nut 14 (DIN 6331) having a KTL coating of about 25 µm.

The stripes 12 with the insulation layer 13 represent a bearing of a battery part, e.g. a surface of a battery housing. The screw 11 and the nut 14 are of the same type as used in the traction battery.

For measuring the connection resistance between the different parts of the screw connection, measurement points M1 to M4 were defined on the stripe 12 (M1), the washer 10(M2), the screw head 11a (M3) and the nut 14 (M4), where the coating was removed. A voltage was applied at the stripes 12 with the connecting points V+, V- 80 mm distant from an axis of the screw connection.

The measurement was carried out with a Resistomat Typ 2304 from Burster using four-wire-measurement.

The screw connection was tightened to a torque of 50 Nm in a first test and to 42.5 Nm in a second test.

Fig. 4b shows a diagram depicting the results of the first and second test measured with the test set up shown in Fig. 4a.

The diagram shows the connection resistance R between the different parts of the screw connection, namely between the stripe 12 and the washer 10 (M1 - M2), the stripe 12, the washer 10 and the screw head 11a (M1 - M3), and the stripe 12, the washer 10, the screw head 11a and the nut14 (M1 - M4, total resistance off the screw connection).

The curve R1 shows the connection resistance measured between the described parts of the screw connection when the latter is tightened with a torque of 50 Nm, and the curve R2 shows the respective connection resistance when the screw connection is tightened with 42.5 Nm.

The diagram clearly shows that the total connection residence of the screw connection is far below the required limit value Rₗᵢₘᵢₜ even if the screw connection is only tightened with a reduced torque of 42.5 Nm.

The washer according to the described example of the present invention is thus apt to improve the conductivity of a screw connection for establishing potential equalization in a traction battery and to maintain the corrosion protection of the affected parts at the same time.

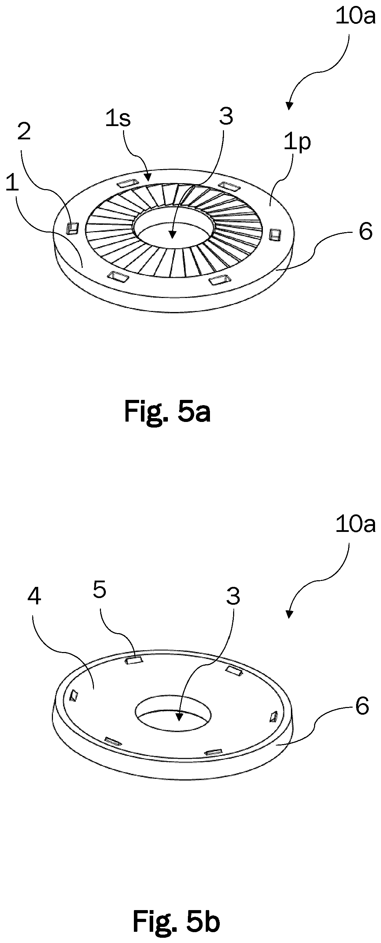

Fig. 5a and 5b show a washer 10a according to a second example of the present invention in a spatial view, wherein Fig. 5a shows the washer 10a from above and Fig. 5b shows the washer 10a from below.

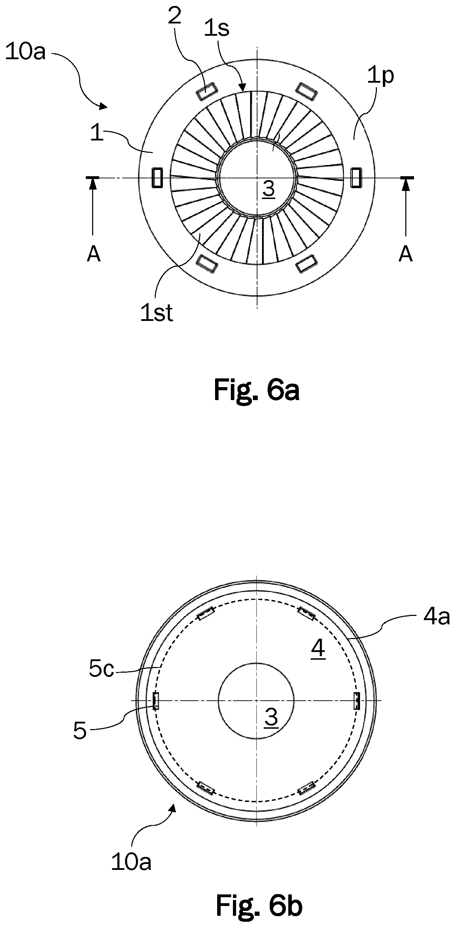

Fig. 6a shows the washer 10a depicted in Figs. 5a and 5b in a top view so that details of the serration 1s are visible. Fig. 6b shows the washer depicted in Figs. 5a and 5b in a bottom view so that the arrangement of the individual teeth 5 is visible.

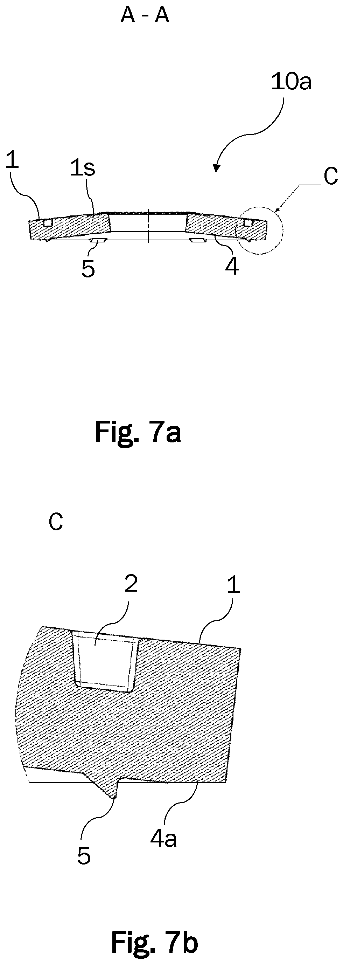

Fig. 7a shows the washer 10a depicted in Figs. 5a and 5b in a sectional view along the sectional plane A-A marked in Fig. 6a. Furthermore, a section C is marked in Fig. 7a which is depicted in a larger scale in Fig. 7b.

As is obvious from Fig. 5a, 5b, 6a, 6b, 7a and 7b that the washer 10a according to the second example is very similar to the washer 10 according to the first example, so that it is referred to the above descriptions as regards the parts which are similar to the washer 10 according to the first example.

The washer 10a according to the second example is different from the washer 10 according to the first example in that it has on its top surface 1 six equally spaced recesses 2 which are disposed in a circle and that in the depicted example, six individual teeth 5 having the same size and shape are arranged on the bottom surface 4 of the washer (see Fig. 5b).

Furthermore, the washer 10a of the second example has at its second surface 4 a flattened portion 4a starting from its peripheral edge 6 and extending in the direction towards the center of the washer 10a to a circle around the washer center which is in distance about half to the circle 5c around the washer center on which the individual teeth 5 are arranged, i.e. the flattened portion 4a is extending from its peripheral edge to the circle around the washer center at ½(d_{PE} - d_{T}) from its peripheral edge 6. The flattened portion 4a is parallel to the washer plane.

### Reference sign list

- 1:: first surface, top surface
- 1s:: serration
- 1^{st}:: tooth/ teeth of serration
- 1a:: point on inner circumference
- 1b:: point on outer circumference 1o of the annular portion
- 1c:: line extending radially from inner circumference 3a
- 1o:: outer circumference of the annular portion
- 2:: recess(es)
- 3:: central hole
- 3a:: inner circumference
- 4:: second surface, bottom surface
- 4a: flattened portion on the second/bottom surface
- 5:: individual tooth/plurality of individual teeth
- 6:: peripheral edge
- 10, 10a:: washer
- 11:: screw
- 11a:: screw head
- 11aa:: under-head surface of the screw 11
- 12:: bearing/stripe with non-conductive coating
- 13:: insulating tape
- 14:: nut
- γ:: cone angle
- β:: teeth inclination angle

## Claims

1. A washer (10, 10a), in particular a contact washer, for a screw connection of a traction battery having a central hole (3), a first surface (1), a second surface (4) opposite the first surface (1), and a peripheral edge (6), wherein
a serration (1s) is arranged around the central hole (3) on the first surface of the washer (10, 10a), and
a plurality of individual teeth (5) is arranged on the second surface (4) of the washer (10, 10a) at a distance from its peripheral edge (6).

2. The washer (10, 10a) according to claim 1 which is a conical washer.

3. The washer (10, 10a) according to claim 2, wherein the first and the second surfaces (1, 4) have a conical shape and are parallel to each other.

4. The washer (10, 10a) according to claim 2 or 3, wherein a portion of the second surface of the washer adjacent to its peripheral edge (outer diameter) is parallel to the washer plane.

5. The washer (10, 10a) according to any one of the preceding claims, wherein the plurality of individual teeth (5) on the second surface (4) is arranged along a circle (5c) around the washer center having a diameter (d_{T}) that is smaller than the diameter (d_{PE}) of the peripheral edge (6) of the washer (10, 10a).

6. The washer (10, 10a) according to any one of the preceding claims, wherein the plurality of individual teeth (5) on the second surface (4) is arranged along a circle (5c) around the washer center (5c) having a diameter (d_{T}) that is larger than the outer diameter (ds) of the annular portion on which the serration (1s) is provided.

7. The washer (10, 10a) according to any one of the preceding claims, wherein the serration (1s) is provided on the first surface (1) in an annular portion thereof having an inner diameter corresponding to a diameter (d_{CH}) of the central hole (3) and an outer diameter (ds) smaller than a diameter (d_{PE}) of the peripheral edge (6) of the washer (10, 10a).

8. The washer (10, 10a) according to any one of the preceding claims, wherein each of the plurality of individual teeth (5) has a triangular cross section.

9. The washer (10, 10a) according to claim 8, wherein one side of the triangle cross section is arranged perpendicular to the second surface (4) of the washer (10, 10a).

10. The washer (10, 10a) according to any one of the preceding claims, wherein the serration (1s) on the first surface (1) includes a plurality of teeth (1st) which are directly adjacent to each other so that there is no planar section between the teeth (1st).

11. The washer (10, 10a) according to claim 10, wherein each tooth (1st) of the serration (1s) extends at a predetermined angle (β) relative to a radial direction from a point (1a) on a circumference (3a) of the central hole (3) to a point (1b) on an outer circumference (1o) of the annular portion.

12. The washer (10, 10a) according to claim 11, wherein the predetermined angle (β) is a negative angle relative to the radial direction, so that an outer end of each tooth (1st) points into tightening direction of the screw connection.

13. The washer (10, 10a) according to any one of the preceding claims wherein in a cross-section view of the washer (10, 10a) a height of each tooth (1st) of the serration (1s) at its outer end is larger than a height on its inner end.

14. Screw connection assembly for a traction battery comprising a screw (11), a nut (14) and a washer (10, 10a) according to any one of the proceeding claims.

15. Assembly comprising the screw connection according to claim 14, wherein the assembly further comprises elements to be connected by the screw connection and wherein an equalization of the electrical potential between the elements is effected.

16. Use of a washer (10, 10a) according to any one of the claims 1 to 11 in a screw connection of a traction battery.

17. Use according to claim 16 wherein the washer (10, 10a) improves the electrical connectivity between the connected parts.

## Patentansprüche

1. Unterlegscheibe (10, 10a) und insbesondere eine Kontaktunterlegscheibe für eine Schraubverbindung einer Antriebsbatterie, die ein mittiges Loch (3), eine erste Fläche (1), eine zweite Fläche (4) gegenüber der ersten Fläche (1) und einen Umfangsrand (6) aufweist, wobei:
eine Riffelung (1s) um das mittige Loch (3) herum an der ersten Fläche der Unterlegscheibe (10, 10a) angeordnet ist, und
eine Vielzahl von individuellen Zähnen (5) an der zweiten Fläche (4) der Unterlegscheibe (10, 10a) mit einer Distanz von dem Umfangsrand (6) angeordnet sind.

2. Unterlegscheibe (10, 10a) nach Anspruch 1, die eine konische Unterlegscheibe ist.

3. Unterlegscheibe (10, 10a) nach Anspruch 2, wobei die ersten und zweiten Flächen (1, 4) eine konische Form aufweisen und parallel zueinander sind.

4. Unterlegscheibe (10, 10a) nach Anspruch 2 oder 3, wobei ein Teil der zweiten Fläche der Unterlegscheibe in Nachbarschaft zu dem Umfangsrand (Außendurchmesser) parallel zu der Unterlegscheibenebene ist.

5. Unterlegscheibe (10, 10a) nach einem der vorstehenden Ansprüche, wobei die Vielzahl von individuellen Zähnen (5) an der zweiten Fläche (4) entlang eines Kreises (5c) um die Unterlegscheibenmitte herum mit einem Durchmesser (d_{T}), der kleiner als der Durchmesser (d_{PE}) des Umfangsrands (6) der Unterlegscheibe (10, 10a) ist, angeordnet sind.

6. Unterlegscheibe (10, 10a) nach einem der vorstehenden Ansprüche, wobei die Vielzahl von individuellen Zähnen (5) auf der zweiten Fläche (4) entlang eines Kreises (5c) um die Unterlegscheibenmitte (5c) herum mit einem Durchmesser (d_{T}), der größer als der Außendurchmesser (ds) des ringförmigen Teils, an dem die Riffelung (1s) vorgesehen ist, angeordnet sind.

7. Unterlegscheibe (10, 10a) nach einem der vorstehenden Ansprüche, wobei die Riffelung (1s) an der ersten Fläche (1) in einem ringförmigen Teil derselben mit einem Innendurchmesser in Entsprechung zu dem Durchmesser (d_{CH}) des mittigen Lochs (3) und mit einem Außendurchmesser (d_{S}), der kleiner als der Durchmesser (d_{PE}) des Umfangsrands (6) der Unterlegscheibe (10, 10a) ist, vorgesehen ist.

8. Unterlegscheibe (10, 10a) nach einem der vorstehenden Ansprüche, wobei jeder aus der Vielzahl von individuellen Zähnen (5) einen dreieckigen Querschnitt aufweist.

9. Unterlegscheibe (10, 10a) nach Anspruch 8, wobei eine Seite des dreieckigen Querschnitts senkrecht zu der zweiten Fläche (4) der Unterlegscheibe (10, 10a) angeordnet ist.

10. Unterlegscheibe (10, 10a) nach einem der vorstehenden Ansprüche, wobei die Riffelung (1s) an der ersten Fläche (1) eine Vielzahl von Zähnen (1st) aufweist, die direkt zueinander benachbart sind, sodass kein Ebenenschnitt zwischen den Zähnen (1st) vorhanden ist.

11. Unterlegscheibe (10, 10a) nach Anspruch 10, wobei sich jeder Zahn (1st) der Riffelung (1s) mit einem vorbestimmten Winkel (β) relativ zu einer Radialrichtung von einem Punkt (1a) an einem Umfang (3a) des mittigen Lochs (3) zu einem Punkt (1b) an einem Außenumfang (1o) des ringförmigen Teils erstreckt.

12. Unterlegscheibe (10, 10a) nach Anspruch 11, wobei der vorbestimmte Winkel (β) ein negativer Winkel relativ zu der Radialrichtung ist, sodass ein äußeres Ende jedes Zahns (1st) in eine Festziehrichtung der Schraubverbindung zeigt.

13. Unterlegscheibe (10, 10a) nach einem der vorstehenden Ansprüche, wobei in einer Querschnittansicht der Unterlegscheibe (10, 10a) die Höhe jedes Zahns (1st) der Riffelung (1s) an seinem äußeren Ende größer als die Höhe an seinem inneren Ende ist.

14. Schraubverbindungsanordnung für eine Antriebsbatterie, die eine Schraube (11) eine Mutter (14) und eine Unterlegscheibe (10, 10a) gemäß einem der vorstehenden Ansprüche aufweist.

15. Anordnung, die die Schraubverbindung gemäß Anspruch 14 umfasst, wobei die Anordnung weiterhin durch die Schraubverbindung zu verbindende Elemente aufweist und wobei ein Ausgleich des elektrischen Potentials zwischen den Elementen bewerkstelligt wird.

16. Verwendung einer Unterlegscheibe (10, 10a) gemäß einem der Ansprüche 1 bis 11 in einer Schraubverbindung einer Antriebsbatterie.

17. Verwendung nach Anspruch 16, wobei die Unterlegscheibe (10, 10a) die elektrische Verbindung zwischen den verbundenen Teilen verbessert.

## Revendications

1. Rondelle (10, 10a), en particulier rondelle de contact, destinée à un raccordement vissé d'une batterie de traction, ayant un trou central (3), une première surface (1), une deuxième surface (4) opposée à la première surface (1), et un bord périphérique (6),
une dentelure (1s) étant disposée autour du trou central (3) sur la première surface de la rondelle (10, 10a), et
une pluralité de dents individuelles (5) étant disposée sur la deuxième surface (4) de la rondelle (10, 10a), à une distance de son bord périphérique (6).

2. Rondelle (10, 10a) selon la revendication 1, qui est une rondelle conique.

3. Rondelle (10, 10a) selon la revendication 2, les première et deuxième surfaces (1, 4) ayant une forme conique et étant parallèles l'une à l'autre.

4. Rondelle (10, 10a) selon la revendication 2 ou 3, une partie de la deuxième surface de la rondelle, adjacente à son bord périphérique (diamètre extérieur), étant parallèle au plan de la rondelle.

5. Rondelle (10, 10a) selon l'une quelconque des revendications précédentes, la pluralité de dents individuelles (5) sur la deuxième surface (4) étant disposée le long d'un cercle (5c) autour du centre de la rondelle, ayant un diamètre (d_{T}) qui est inférieur au diamètre (d_{PE}) du bord périphérique (6) de la rondelle (10, 10a).

6. Rondelle (10, 10a) selon l'une quelconque des revendications précédentes, la pluralité de dents individuelles (5) sur la deuxième surface (4) étant disposée le long d'un cercle (5c) autour du centre (5c) de la rondelle, ayant un diamètre (d_{T}) qui est supérieur au diamètre extérieur (ds) de la partie annulaire sur laquelle est réalisée la dentelure (1s).

7. Rondelle (10, 10a) selon l'une quelconque des revendications précédentes, la dentelure (1s) étant réalisée sur la première surface (1) dans une partie annulaire de celle-ci ayant un diamètre intérieur correspondant à un diamètre (d_{CH}) du trou central (3) et un diamètre extérieur (ds) inférieur à un diamètre (d_{PE}) du bord périphérique (6) de la rondelle (10, 10a).

8. Rondelle (10, 10a) selon l'une quelconque des revendications précédentes, chacune de la pluralité de dents individuelles (5) ayant une section transversale triangulaire.

9. Rondelle (10, 10a) selon la revendication 8, un côté de la section transversale triangulaire étant disposé perpendiculairement à la deuxième surface (4) de la rondelle (10, 10a).

10. Rondelle (10, 10a) selon l'une quelconque des revendications précédentes, la dentelure (1s) sur la première surface (1) comprenant une pluralité de dents (1st) qui sont directement adjacentes les unes aux autres, de sorte qu'il n'y a pas de section plane entre les dents (1st).

11. Rondelle (10, 10a) selon la revendication 10, chaque dent (1st) de la dentelure (1s) s'étendant à un angle prédéterminé (β) par rapport à une direction radiale, depuis un point (1a) situé sur une circonférence (3a) du trou central (3) jusqu'à un point (1b) sur une circonférence extérieure (1o) de la partie annulaire.

12. Rondelle (10, 10a) selon la revendication 11, l'angle prédéterminé (β) étant un angle négatif par rapport à la direction radiale, de sorte qu'une extrémité extérieure de chaque dent (1st) est orientée dans la direction de serrage du raccordement vissé.

13. Rondelle (10, 10a) selon l'une quelconque des revendications précédentes, dans une vue en coupe transversale de la rondelle (10, 10a), une hauteur de chaque dent (1st) de la dentelure (1s) au niveau de son extrémité extérieure étant supérieure à une hauteur au niveau de son extrémité intérieure.

14. Ensemble de raccordement vissé pour une batterie de traction, comprenant une vis (11), un écrou (14) et une rondelle (10, 10a) selon l'une quelconque des revendications précédentes.

15. Ensemble comprenant le raccordement vissé selon la revendication 14, l'ensemble comprenant en outre des éléments destinés à être reliés par le raccordement vissé et une égalisation du potentiel électrique entre les éléments étant réalisée.

16. Utilisation d'une rondelle (10, 10a) selon l'une quelconque des revendications 1 à 11 dans un raccordement vissé d'une batterie de traction.

17. Utilisation selon la revendication 16, la rondelle (10, 10a) améliorant la connectivité électrique entre les pièces reliées.
